# EUROPEAN PATENT SPECIFICATION

(11) **EP 1 085 052 B1**
(45) Date of publication and mention of the grant of the patent: **13.04.2005**
(21) Application number: 00303340.4
(22) Date of filing: 19.04.2000
(51) Int. Cl.: C08L 67/02, C08L 77/00, C08K 9/06

(54) **Thermoplastic molding composition**
Thermoplastische Formmasse
Composition à mouler thermoplastique

(30) Priority: 19.04.1999 US 293915
(43) Date of publication of application: 21.03.2001
(73) Proprietor: GENERAL ELECTRIC COMPANY, Schenectady, NY 12345 (US)
(72) Inventor: Khouri, Farid Fouad, Clifton Park, New York 12065 (US); Brown, Sterling Bruce, Niskayuna, New York 12309 (US); Singh, Navjot, Clifton Park, New York 12065 (US)
(74) Representative: Szary, Anne Catherine, Dr.

(56) References cited:
- EP-A- 0 393 616
- EP-A- 0 523 251
- FR-A- 2 640 632

## Description

The present invention relates to thermoplastic molding compositions having superior properties, such as improved impact resistance. In particular, the invention pertains to a compatibilized, impact-modified blend containing a thermoplastic polyester resin, a modified silicone rubber compound, and an epoxy-functionalized compound.

Polyalkylene terephthalate thermoplastics have excellent physical properties, heat stability, weatherability, and electrically insulating properties. Over the last decade polyethylene terephthalate (PET) and polybutylene terephthalate (PBT) have found increasing use in engineering applications. These materials are semi-crystalline and are used in both the pure form and as toughened blends. Applications of these polymers are however limited by their poor impact performance as measured by the notched Izod impact strength. The use of elastomeric (*i.e*., rubbery) polymers as impact modifying additives in thermoplastic blend compositions is well known. Various strategies have been used to improve the impact performance of these polymers, however all of them have their own limitations since they have detrimental effects on other properties. As an example, the impact resistance can be improved by incorporating a diene-based rubber; however the weatherability and the heat stability of the final blend are inferior to that of the original resin. Acrylic rubbers are better for maintaining weatherability, but they do not provide improvements in the low temperature impact strength of the material.

It is often desirable to disperse a polydimethylsiloxane-based impact modifier into blend compositions. Polydimethylsiloxane impact modifiers provide low temperature impact strength due to their low Tg (~ -129°C), superior weatherability, high flow and improved flame retardance as compared to the butadiene-based rubbers. Conventional routes to using siloxane impact modifiers involve their dispersion in the form of copolymers like block copolymers, core-shell copolymers or graft copolymers with other thermoplastics that are compatible with the matrix polymer. The copolymer approach also helps in controlling the particle size of the rubbery phase which is critical for tailoring the impact performance of the blend. While these approaches are viable, they do not provide a cost effective solution due to the added cost of preparing graft copolymers or block copolymers.

One approach that does not involve copolymers is found in US Patent No. 5,102,941, which is directed to the blending of thermoplastic polyesters with functional fluids and crosslinked silicone rubber latex made by emulsion polymerization and having a controlled particle size of 0.1 to 0.5 µm. However, that method involves dissolving the thermoplastic powder in the siloxane latex to form a dispersion, followed by chemical coagulation, washing and drying. Those additional processing steps add extra cost to the final product and the elimination of those steps is desirable.

The use of silicone powders for improving the impact performance and flame retardance of thermoplastics without pre-forming copolymers has been reported recently. These powders are prepared by dispersing high molecular weight silicone gums using methods taught in, for example, US Patent Nos. 3,824,208 and 5,153,238, which claim that the powders have storage stability and are gel free. US Patent 5,153,238 recommends preparing the powder by mixing in a high intensity mixer at temperatures varying from 100°C to 200°C. The use of those powders in improving the performance of several resins has been reported. US Patent Nos. 5,391,594 and 5,508,323 are directed to methods for using the silicone powders for improving the burn character of thermoplastic resins that results in improvements in the rate of smoke release, generation of smoke and evolution of toxic carbon monoxide. Another patent in the same family is US Patent 5,412,014, which is directed to the use of a phosphorus flame retardant as a synergist in conjunction with the silicone powders for improving the flame retardance of these powders. Further, Buch, *et al.* ("Silicone-Based Additives for Thermoplastic Resins Providing Improved Impact Strength, Processing and Fire Retardant Synergy", Dow Corning Corp., Fire Retardant Chem. Assoc., Oct. 26-29, 1993) report the use of resin modifier products termed RM 4-7081 and RM 4-7051 for improving the flame retardance of organic resins. That paper also discloses the improvements in impact performance of engineering resins such as polyphenylene ether and PPS.

The use of those powders prepared from silicone gums with epoxy and carboxyl functionalities for improving the impact performance of polycarbonate resins and blends of polycarbonate is the subject of US Patent Nos. 5,556,908 and 5,594,059. US Patent No. 5,610,223 reports improvements in polyamide-based systems. The polyester-, polycarbonate- and polyamide-based polymer blend compounds rely on the reactive epoxy or ester functionalities on the silicone gums to effect the compatibilization reaction with amino, acid or hydroxyl end groups on the thermoplastic resins. This type of approach depends on the commercial availability of pre-functionalized polyorganosiloxane gums and is limited by the functionality concentrations available on these gums. Moreover, the copolymer-forming compatibilizing reaction between the thermoplastic resin and the functionalized polyorganosiloxane gum may be limited by the mobility of the siloxane chain as the molecular weight of the polyorganosiloxane gum increases.

Japanese laid-open patent application JP 08208951 is directed to a polyester/silicone resin compound which is compatibilized without any reactive groups on the silicone resin (gum). Instead, a functionalized silicone oil is used to compatibilize the polyester with a non-functionalized silicone gum. Molded parts made from the blends using this composition were described as having improved coefficients of friction and good surface qualities with no delamination. The particular polyester used in these blends contained polytetrahydrofuran or polycaprolactone segments, which may account for the results achieved by enhancing the miscibility of the blend components. The impact resistance of the blends made with the functionalized silicone fluids is not discussed, and no data were presented to quantitate the notched Izod impact strength. Comparative examples 7 and 8 of the present application demonstrate that parts molded from PBT blends, compatibilized according to this strategy exhibit only slight improvements in impact strength, and in fact show signs of severe delamination.

French patent application FR 2,640,632, assigned to Rhone-Poulenc Chimie, is directed to a method for compatibilizing a polyester or polyamide blend said to have improved impact resistance and surface qualities. The thermoplastic resin is blended with a non-reactive polydiorganosiloxane gum and a mono- or bi-functional polyorganosiloxane oil. The polydiorganosiloxane gum is described as being a high viscosity linear polymer with a molecular weight greater than 300,000 g/mol. In a preferred embodiment, the gum contains 100-1000 ppm vinyl groups.

The compatibilization strategy largely relies on a copolymer-forming reaction between the epoxy functionality on the silicone oil and the amine or carboxylic end group functionality on the polyamide or polyester resin, respectively. The exemplified PBT blend composition contained 80 parts by weight PBT, 18 parts by weight vinyl-substituted polydimethylsiloxane gum, and 2 parts by weight bifunctional polydimethylsiloxane oil. The oil contained glycidoxypropyl functional groups. Articles molded from the resulting compatibilized blend were tested using the Charpy test. The impact strength of the molded articles was given as 5.5 kJ/m², an increase from 3.1 kJ/m² when the blend was made without the functionalized silicone oil. It is clear then that compatibilization using this oil does have some effect; however, the actual impact resistance is still quite low. These values correspond to 54.9J/m (1.03 ft.-lb./in.) and 30.9 J/m (0.58 ft-lb./in.) for comparison to notched Izod impact strength values.

United States Patent No. 5,102,941 is directed to a thermoplastic polyester composition composed of a polyester, a crosslinked polyorganosiloxane latex rubber, a functionalized silane containing at least one alkoxy or chloride radical, and optionally, a filler. The polyorganosiloxane rubber is a crosslinked latex with an average particle diameter of 0.1 to 0.5 µm and a swelling degree of 3 to 50. The functional groups on the silane may be epoxy, including for example glycidoxyalkyl or β-(3,4-epoxycyclohexyl)ethyl, isocyanate, or amino groups. Reinforcing fillers which optionally may be added to the blend are glass fibers, carbon fibers, aramid fibers, metal fibers, asbestos fibers, whiskers, glass beads, glass flakes, calcium carbonate, talc, mica, aluminum oxide, magnesium hydroxide, boron nitride, beryllium oxide, calcium silicate, clay, and metal powders. The addition of silica fillers is not suggested. Polymer blends composed of 70-90 parts PBT, 10-30 parts polyorganosiloxane rubber, and 1-5 parts γ-glycidoxypropyltrimethoxysilane were tested for notched Izod impact strength 3.18mm (1/8" notched at 23°C), giving results as high as 35 kg-cm/cm in the absence of fillers and 16 kg-cm/cm in the presence of 50 parts glass fiber filler. This corresponds to a maximum of only about 340J/m (6.37 ft.-lb./in.) notched Izod impact strength. Some of these compounds also suffered a reduction in other polymer qualities such as thermal deterioration and weathering resistance.

The most desirable PBT blend possesses all the advantages of PBT, for example rigidity, toughness, low moisture absorbance, high surface finish, and good mold performance, plus superior notched Izod impact strength. The compounds of the patents described above all provide to some degree an impact modified polymer blend composition, but there still remains a need for compatibilized PBT blends which have an even, fine, stable dispersion of the minor phase, which can be molded to form high-quality parts which display excellent impact strength, and specifically, exceptional notched Izod impact strength. In particular, there still remains a need for a PBT blend compatibilized using a method which does not rely on the availability of prefunctionalized silicone gums.

In one aspect, the present invention provides a thermoplastic molding composition, comprising:
a) 100 parts by weight of at least one polyester or polyamide;
b) from 5 to 40 parts by weight of an impact modifier composition comprising
   i) 100 parts by weight of a polysiloxane compound as defined in claim 1,
   ii) from 30 to 100 parts by weight of a silica filler; and
   iii) from 0 to 20 parts by weight of a silicone additive; and
c) from 0.05 to 7 parts by weight of an epoxy- or orthoester-functionalized compound.

In a further aspect, the present invention provides a method for preparing a blend of
a) 100 parts by weight of at least one polyester or polyamide;
b) from 5 to 40 parts by weight of an impact modifier composition comprising
   i) 100 parts by weight of a polysiloxane compound as defined in claim 1;
   ii) from 30 to 100 parts by weight of a silica filler; and
   iii) from 0 to 20 parts by weight of a silicone additive; and
c) from 0.05 to 7 parts by weight of an epoxy- or orthoester-functionalized compound, which method comprises intimately mixing the components of the blend for a time and under shear conditions sufficient to convert the impact modifier composition to dispersed particles coated with the at least one polyester or polyamide.

The present invention provides a composition comprising a polyester or polyamide, and an impact modifying polysiloxane composition, compatibilized with an epoxy- or orthoester- functionalized monomer or oligomer. Compositions according to this invention have enhanced blend performance in terms of both higher room temperature impact strength and low temperature impact strength than polyester compositions described in the prior art, with stable blend morphology even under abusive molding conditions.

The compositions have particular utility for making molded articles requiring improved impact strength. Such molded articles are used in many applications requiring low temperature impact strength, including automotive, building and construction applications, and in articles of manufacture such as garden furniture, boats, signs, outdoor enclosures for electrical or telecommunications interface devices such as smart network interface devices (SNID), and the like.

The first component of the molding composition of the present invention is at least one polyester or polyamide. The polyester or polyamide may be thermoplastic, elastomeric, or blends thereof. The polyester or polyamide component can be any polymer that is capable of reacting with an epoxy- or orthoester-functionalized compound. Preferred polyesters include polymeric diol esters of terephthalic acid and iso/terephthalic acid. They are available commercially or can be prepared by known techniques, such as by the alcoholysis of esters of terephthalic acid with a diol and subsequent polymerization, by heating diols with the free acids or with halide derivatives, etc. Especially preferred polyesters are poly(1,4-butylene terephthalate) (PBT) and poly(ethylene terephthalate) (PET). Mixtures and/or copolymers of two or more of the foregoing polyesters are also within the scope of the present invention. Preferred polyamides include for example polyamides (Nylons) 4/6, 6, 6/6, 11, 12, 6/3, 6/4, 6/10 and 6/12 as well as polyamides resulting from terephthalic acid and/or isophthalic acid and trimethyl hexamethylene diamine, polyamides resulting from adipic acid and meta-xylylenediamines, polyamides resulting from adipic acid, azelaic acid and 2,2-bis-(p-aminocyclohexyl)propane, semi-crystalline polyamides resulting from combinations of terephthalic and/or isophthalic and/or adipic acids with hexamethylene diamine, semi-crystalline polyamides resulting from terephthalic and/or isophthalic acids and hexamethylene and 2-methyl pentamethylene diamines, and polyamides resulting from terephthalic acid and 4,4'-diamino-dicyclohexylmethane. Preferred polyamides are the polyamides 6, 6/6, 6/10 and 4/6, most preferably polyamide 6/6. Mixtures and/or copolymers of two or more of the foregoing polyamides are also within the scope of the present invention.

It is also understood that use of the term "polyamides" herein is intended to include the toughened or super tough polyamides. Super tough polyamides or super tough nylons, as they are more commonly known, are available commercially, *e.g*., from E.I. duPont under the tradename Zytel ST, or may be prepared in accordance with a number of U.S. patents, including, among others, Epstein, U.S. Pat. No. 4,174,358; Novak, U.S. Pat. No. 4,474,927; Roura; U.S. Pat. No. 4,346,194; and Joffrion, U.S. Pat. No. 4,251,644.

The polyester or polyamide component may include any of the foregoing polymers (thermoplastic polyester, elastomeric polyester, thermoplastic polyamide, elastomeric polyamide) or any blend thereof.

The impact modifier with which the polyester and/or polyamide is blended includes i) a polysiloxane compound; ii) an inorganic filler; and optionally iii) a silicone additive. The polysiloxane compound preferably has the following structure: 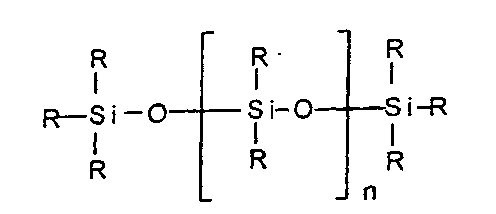 wherein each R independently represents hydrogen, C₁₋₁₅ alkyl, C₂₋₁₀ alkenyl, C₅₋₁₂ cycloalkyl, or aryl, and n is such that the compound has a nominal weight average molecular weight of from about 100,000 to about 1,500,000 grams/mole. In a more preferred embodiment, the polysiloxane has a nominal weight average molecular weight of about 800,000. Further, it is preferred that about 0.25 mole percent of the R groups represent a vinyl group. The polysiloxane compound is preferably present in the impact modifier in an amount of 100 parts by weight. The polysiloxanes may be manufactured according to conventional methods and many are commercially available, *e.g.*, from GE Silicones, Dow Corning, *etc*.

The impact modifier also contains an inorganic filler component. Suitable fillers include silica, alumina, titania, Wollastonite, calcium silicate, carbon black, calcium carbonate, kaolin, aluminum silicate, bentonite, talc, synthetic magnesium silicate, zeolites, zinc oxide, barium sulfate, calcium sulfate, wood flour, wood cellulose, or mixtures thereof. The fillers may be calcined and/or surface treated as appropriate to improve the final properties of the filler-containing compositions. A particularly preferred filler component is a fumed silica, preferably a silane-treated fumed silica. Most preferably the filler component is a D₄ (octamethylcyclotetrasiloxane) treated fumed silica. The fumed silica is present in the impact modifier in an amount of from 30 to 100 parts by weight based on the weight of the polysiloxane compound, most preferably from 60 to 70 parts by weight.

The impact modifier also optionally contains one or more silicone additives. One class of suitable additives includes methoxy stopped silicones having the following structure: 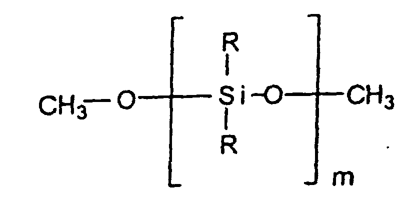 wherein m is from 4 to 30, and each R independently represents hydrogen, C₁₋₁₅ alkyl, C₂₋₁₀ alkenyl, C₅₋₁₂ cycloalkyl, or aryl. In a preferred embodiment, m is 9.

Another class of suitable additives are silanol stopped silicones having the following structure: 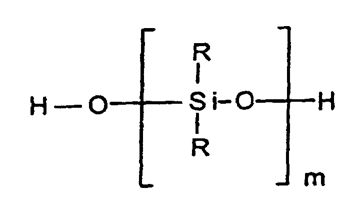 wherein m is from 4 to 30, and each R independently represents hydrogen, C₁₋₁₅ alkyl, C₂₋₁₀ alkenyl, C₅₋₁₂ cycloalkyl, or aryl. In a preferred embodiment, m is 7. Such compounds are commercially available from GE Silicones.

Another suitable silicone additive is a vinyl functionalized alkoxysilane, preferably a commercially available vinyl triethoxysilane.

If the silicone additive is present, any one, or any combination of the foregoing preferred additives may be used. The silicone additive(s) may be present in an amount of from 0 to 20 parts by weight. In a preferred embodiment, all three of the above-described additives are present, with the methoxy-stopped silicone and the silanol-stopped silicone each being present in an amount of about 2.5 parts by weight, and the vinyl triethoxysilane being present in an amount of about 0.8 parts by weight based on the weight of the polysiloxane compound.

The polysiloxane compound-containing impact modifiers in the polyester blends of the present invention comprise modified silicone gums. The inventors have found that substituting the neat gum with a higher modulus silicone powder or silicone rubber is beneficial for increasing the impact resistance of the blend. Combining these modified gums with a low viscosity epoxy- or orthoester-functionalized compound results in a molding composition which yields parts with superior impact strength.

Silicone powders may be used as the polysiloxane component of the impact modifier with the present invention. These powders preferably contain about 63 parts by weight of fumed silica, and about 100 parts by weight polydimethylsiloxane which may or may not be vinyl substituted. The most preferred silicone gum is a 0.25 mol% vinyl substituted polydimethylsiloxane with an approximate weight average molecular weight of about 800,000 g/mol. Preferably, D₄-treated fumed silica is used. The formation of these types of powders is discussed in for example, U.S. Patent No. 5,153,238. The polysiloxane and the silica are mixed at a high temperature under high shear forces to form a free-flowing powder.

The third component of the molding composition is an epoxy- or orthoester-functionalized compound (hereinafter sometimes referred to as "compatibilizers"). Epoxy-functionalized compounds for use with the invention include compounds containing an epoxy functionalization which is capable of compatibilizing the mixture of the polyester or polyamide and the impact modifier. Such compounds include functionalized silicone fluids of the following formula: 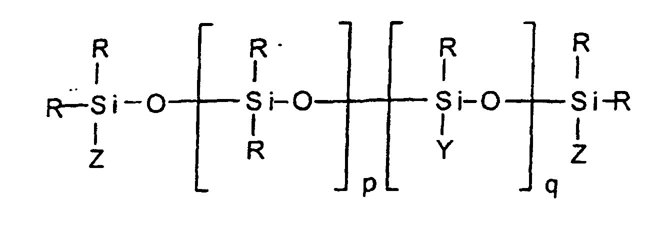 wherein Y is given by the formula 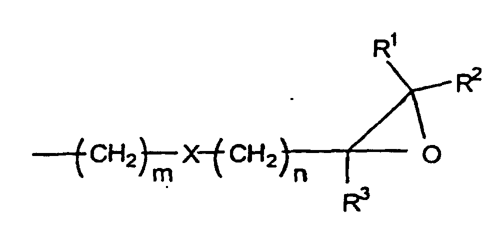 Z is Y or R; p is from 1 to 100; q is from 1 to 50; m is from 1 to 5; n is from 1 to 3; R, R¹, R² and R³ are each independently H, C₁₋₁₀ alkyl, C₂₋₁₀ alkenyl, C₅₋₁₂ cycloalkyl or aryl; further R¹ and R³ can be joined together to form a 5- or 6-membered ring; and

X is -CH₂-, O, -NH- or S.

Those compounds may be made by, for example, the hydrosilation of 4-vinylcyclohexene monoxide (12.5%) by dimethyl hydrogen polysiloxane (87.5%). Compounds within this class are commercially available from, *e.g*., GE Silicones. A preferred epoxy- functionalized silicone fluid is sold under the name UV 9315 by GE Silicones. These fluids contain functional groups which react with the carboxylic acid and/or hydroxyl groups present on the end of polyester resins, and with the carboxylic acid and/or amine groups present as end groups on polyamide resins. The epoxy- or orthoester- functionalized compound contain an oligomeric chain which is miscible with the impact modifier phase of the blend.

Surprisingly, the inventors have also found that compounds with orthoester- or epoxy functional groups such as those compounds above can be highly effective in compatibilizing polyester/silicone blends even without a polymeric side chain miscible with the silicone phase of the blend. Molecules with shorter chains are effective at compatibilization, yielding compounds with highly improved impact strength. Monomeric compatibilizers also can be highly effective at compatibilizing certain blends. In these types of blends, organosilanes and other small organic molecules containing a glycidoxyalkyl group also act as effective compatibilizers. Additionally, compounds according to the following formula are useful as functionalized compatibilizers with the present invention: 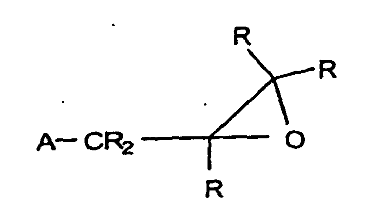 wherein each R independently represents hydrogen, C₁₋₁₀ alkyl, C₂₋₁₀ alkenyl, C₅₋₁₂ cycloalkyl or aryl, and A represents trialkoxysiloxy, C₁₋₁₀ alkyl ester, C₁₋₂₂ alkyl, C₂₋₂₂ alkenyl, or polysiloxanes with 1-50 repeat units.

Compatibilizers useful in the present invention also include the compounds described above which, instead of having an epoxy functionality, have an orthoester functionality. Thus, the orthoester functionalized compounds useful in the present invention include compounds containing the following functional group: 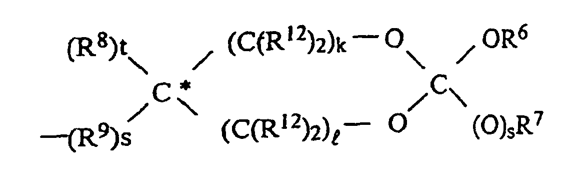 wherein
R⁶ is a C₁₋₁₀ primary or secondary alkyl or aralkyl or a C₆₋₁₀ aromatic radical or an alkylene radical forming a second 4 to 8 membered ring with C* thus producing a bicyclo compound; R⁷ is a C₁₋₁₀ primary or secondary alkyl or aralkyl or a C₆₋₁₀ aromatic radical, or R⁶ and R⁷ taken together with atoms connecting them can form a 4 to 8 membered ring thus producing a spirocyclo compound; R⁸ is a hydrogen, alkyl or aryl; R⁹ is a C₁₋₆ alkylene radical; k is an integer from 1 to 2; l is an integer from 0 to 1; s is an integer from 0 to 1; t is 0 when R⁶ and C* form a bicyclo compound and is otherwise 1; and each R¹² is independently hydrogen, C₁₋₅ hydrocarbon, substituted or unsubstituted aromatic radical or a halogen.

The compound containing the orthoester functionality may include the silicone fluids set forth above, as well as the compounds defined by "A" (*i.e.*, trialkoxysiloxy, C₁₋₁₀ alkyl ester, C₁₋₂₂ alkyl, C₂₋₂₂ alkenyl, or polysiloxanes with about 1-50 repeat units). Methods of attaching such orthoester functionalities would be apparent to those skilled in the art. See U.S. Patent No. 5,691,411,

The compositions of the present invention may be formed by combining the components described above in ways conventional in the art. In a preferred embodiment, the components are intimately mixed for a time and under shear conditions sufficient to convert the impact modifier to dispersed particles coated with the polyester and/or polyamide component, for example by mixing in a high speed mixer for about one to five minutes. During intimate mixing the temperature of the composition rises due to shear heating but does not exceed the melting point of the thermoplastic component. Following intimate mixing, the compositions may be stored before further processing. However, in preferred embodiments the compositions are further processed within about 2-6 hours after intimate mixing.

The mixed compositions are further mixed at a more intimate level in standard processing equipment at a temperature such that the thermoplastic component is substantially melted. Standard processing equipment includes, but is not limited to, extrusion equipment, kneading equipment, batch melt-mixing equipment, and the like.

The combination of a higher modulus silicone powder or silicone rubber and a low viscosity compatibilizer yields a blend product with high compatibilization efficiency. This combination provides a blend with substantially higher impact resistance compared to blends made by prior art methods, as is demonstrated in Tables 1 and 2. The combination of these two strategies for improving the impact strength of polyester- or polyamide-silicone blends (use of a higher modulus modified silicone compound with a low molecular weight, low viscosity compatibilizer) produces a synergistic improvement in notched Izod impact strength. Comparing the notched Izod impact strength of Example 10 to Comparative Examples 4 and 8 clearly indicates a more than additive effect of combining the two strategies. The same effect is seen when comparing Example 12 with Comparative Examples 5 and 8.

In the examples which follow, the silicone powders were prepared in accordance with US Patent No. 3,824,208.

**Table 1.**

| Comparative PBT/Silicone Resin Blends | | | | | | | | |
|---|---|---|---|---|---|---|---|---|
| Comparative Examples/Composition by Part | | | | | | | | |
| Component | 1 | 2 | 3 | 4 | 5 | 6 | 7 | 8 |
| PBT | 100 | 100 | 100 | 100 | 100 | 100 | 100 | 100 |
| PDMS Gum | - | 10 | - | - | - | - | 10 | - |
| PDMS Gum (0.25 mol% vinyl substituted) | - | - | 10 | - | - | - | - | 10 |
| Silicone Powder¹ | - | - | - | 16.3 | - | - | - | - |
| Silicone Rubber² | - | - | - | - | 16.3 | - | - | - |
| Epoxidized | - | - | - | - | - | 2.5 | 2.5 | 2.5 |
| Silicone Fluid | | | | | | | | |
| Notched Izod | (0.6) | (1.35) | (1.1) | (3.7) | (1.45) | (0.75) | (1.3) | (1.3) |
| Impact (ft-lb/in) J/m | 32.0 | 37.0 | 58.6 | 197.2 | 77.3 | 40 | 69.3 | 69.3 |
| Tensile Elongation (%) | >300 | 31 | 28 | 80 | 51 | 146 | 24 | 18 |
| Tensile Modulus | (126) | (123) | (118) | (103) | (118) | (126) | (113) | (115) |
| (Kpsi) MPa | 869 | 848 | 813 | 710 | 813 | 869 | 779 | 793 |
| Delamination Present? | N/A³ | Yes | Yes | No | No | N/A | Yes | Yes |

| | | | | | | | | |
|---|---|---|---|---|---|---|---|---|
| ¹Silicone Powder contains 100 pbw 0.25 mol% vinyl substituted polydimethylsiloxane and 63 pbw D₄-treated fumed silica (200 m²/g). | | | | | | | | |
| ²Silicone rubber contains 100 pbw 0.25 mol% vinyl substituted polydimethylsiloxane and 63 pbw D₄-treated fumed silica (200 m²/g), 2.5 pbw methoxy stopped silicone fluid (MeOD₉OMe), 2. 5pbw silanol stopped silicone fluid (HOD7OH), and 0.8 pbw vinyltriethoxysilane. | | | | | | | | |
| ³Not applicable. | | | | | | | | |

**Table 2.**

| PBT/Silicone Resin Blends | | | | |
|---|---|---|---|---|
| Component | Examples | | | |
| | 9 | 10 | 11 | 12 |
| PBT | 100 | 100 | 100 | 100 |
| PDMS Gum | - | - | - | - |
| PDMS Gum (0.25 mol% vinyl substituted) | - | - | - | - |
| Silicone Powder³ | 16.3 | 16.3 | - | - |
| Silicone Rubber⁴ | - | - | 16.3 | 16.3 |
| Epoxidized Silicone Fluid | 1.25 | 2.5 | 1.25 | 2.5 |
| Notched Izod Impact (ft-lb/in) J/m | (9.1) 485 | (9.9) 527 | (9.95) 530 | (11.7) 634 |
| Tensile Elongation (%) | 42 | 50 | 37 | 47 |
| Tensile Modulus (Kpsi) mPa | 107 738 | 107 738 | 111 765 | 107 738 |
| Delamination Present? | No | No | No | No |

| | | | | |
|---|---|---|---|---|
| ³For composition, see note 1 to Table 1. | | | | |
| ⁴For composition, see note 2 to Table 1. | | | | |

### EXAMPLES

### COMPARATIVE EXAMPLES 1-5.

### Uncompatibilized PBT/Silicone Resin Blends.

One hundred parts by weight (pbw) PBT resin was mixed with the amounts of silicone gum, powder, or rubber indicated in Table 1 for one minute in a high speed Henschel mixer. The resulting blends (or PBT alone) were melt compounded by extrusion on a Welding Engineers 20mm counter-rotating twin screw extruder with zone temperatures of 93°C (200°F), 204°C (400°F), 4x249°C (480°F) and 249°C (480°F) at the die. The extruder was operated at 300-400 rpm and the feed rate was such that the torque was about 5 amps. The resulting pellets were dried in a circulating air oven at 110°C for 4 hours and then molded into tensile and Izod test bars on a 28 ton Engel machine with barrel temperatures of 249°C (480°F) and a mold temperature in the range of 57-63°C (135-145°F). Parts were tested by ASTM test methods.

Results of testing on parts molded from the polymer blends are given in Table 1. None of the blends tested exhibited impact strength significantly greater than has been reported in the prior art. The advantage of substituting the neat gum (whether vinyl substituted or not) with either a silicone powder or a silicone rubber is clearly shown by the lack of delamination in parts molded from blends employing the modified, higher modulus gums.

### COMPARATIVE EXAMPLES 6-8.

### PBT/Silicone Gum Blends Compatibilized Using Epoxidized Silicone Fluid.

Blends of PBT and silicone gum, in the proportions indicated in Table 1 were mixed for one minute in a high speed Henschel mixer. Epoxidized silicone fluid (UV 9315, G.E. Silicones) was then added (2.5 pbw) and mixing resumed for 30-45 seconds. The blends were then melt compounded, molded and tested as in Examples 1-5. The results of the testing, also in Table 1, indicate that the epoxidized silicone fluid did not have appreciable effects on notched Izod impact strength over PBT/silicone gum blends with no epoxidized silicone fluid (compare examples 2 and 7, and 3 and 8).

### EXAMPLES 9-12.

Compatibilized PBT Blends with Higher Modulus Modified Silicones and Epoxidized Silicone Fluid.

Blends were made as in the previous examples, with silicone powder or silicone rubber in the proportions indicated in Table 2. Testing results indicate that the impact strength of these blends is dramatically improved over compounds described in the prior art.

### EXAMPLES 13-14.

### PBT/Silicone Powder Blends Compatibilized with Monomeric Functionalized Compatibilizers.

Blends were mixed, extruded and molded as described above using 100 pbw PBT resin, 16.3 pbw silicone powder as described in the footnote to Table 1, and 1.0 pbw monomeric compatibilizer as indicated in Table 3. Comparison of the notched Izod impact strength of a blend compatibilized with epoxidized silicone fluid (an oligomer) with that of blends compatibilized with the monomeric compatibilizers shows that this method of compatibilization is highly successful. The favorable results with glycidoxypropyl trimethoxysilane is both surprising and unexpected.

**Table 3.**

| The Use of Epoxy Functionalized Monomers for PBT/Silicone Powder Compatibilization. | | | |
|---|---|---|---|
| | Example/Composition by parts | | |
| Component | 9 | 13 | 14 |
| Polybutylene Terephthalate | 100 | 100 | 100 |
| Silicone Powder | 16.3 | 16.3 | 16.3 |
| Epoxidized silicone fluid | 1.25 | -- | -- |
| Glycidoxypropyl Trimethoxysilane | -- | 1.0 | -- |
| Glycidyl Methacrylate | -- | -- | 1.0 |
| Notched Izod Impact at 25°C (ft.lb/in) J/m | (9.1) 485 | (8.35) 445 | (1.6) 85 |
| Notched Izod Impact at -20°C (ft.lb/in) J/m | ND ^{*} | (1.35) 72 | (1.0) 53 |
| Tensile elongation (%) | 42 | 45 | 144 |
| Tensile modulus (Kpsi) mPa | (107) 738 | (137) 945 | (134) 924 |

| | | | |
|---|---|---|---|
| *ND = not done. | | | |

### EXAMPLES 15-16

Blends were made as in the previous examples, with silicone powder or silicone rubber in the proportions indicated in Table 4. One sample from each blend was subjected to molding conditions of 249-254°C (480-490°F) and a 40 second residence time ("A" samples). Another sample from each blend was subjected to molding conditions of 266-271°C (510-520°F) melt temperature and a 120 second residence time ("B" samples). The notched Izod, tensile elongation and tensile modulus values for each sample are set forth in Table 4. The rubber modified blend had better retention of room temperature impact strength after abusive molding conditions, and showed improved low temperature impact strength in the notched Izod test.

**Table 4.**

| Component | Example 15 | | Example 16 | |
|---|---|---|---|---|
| PBT 315 | 100 | | 100 | |
| Silicone powder | 16.3 | | | |
| Silicone Rubber | | | 16.3 | |
| UV9315 | 2.5 | | 2.5 | |

| Properties | 15A | 15B | 16A | 16B |
|---|---|---|---|---|
| Nl Impact @ | (8.2) 437 | (2.6) 138 | (11.75) 626 | (8.6) 458 |
| RT(ft.lb/in) J/m | | | | |
| Nl Impact @ | (2.48) 132 | (2.8) 149 | (3.55) 189 | (2.2) 117 |
| -20°C(ft.lb/in) J/m | | | | |
| Tensile elongation (%) | 49 | 34 | 56 | 38 |
| Tensile modulus (Kpsi) mPa | (131.2) 905 | (130.6) 900 | (133.5) 920 | (129.3) 891 |

## Claims

1. A thermoplastic molding composition, comprising:
a) 100 parts by weight of at least one polyester or polyamide;
b) from 5 to 40 parts by weight of an impact modifier composition comprising
i) 100 parts by weight of polysiloxane compound having the structure 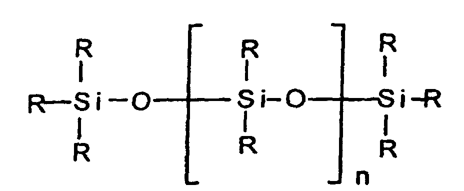 wherein each R independently represents hydrogen, C₁₋₁₅ alkyl, C₂₋₁₀ alkenyl, C₅₋₁₂ cycloalkyl, or aryl, and n is such that the compound has a nominal weight average molecular weight of from 100,000 to 1,500,000.
ii) from 30 to 100 parts by weight of a silica filler; and
iii) from 0 to 20 parts by weight of a silicone additive; and
c) from 0.05 to 7 parts by weight of an epoxy- or orthoester-functionalized compound.

2. The composition of claim 1, wherein the polyester is a polyalkylene terephthalate resin.

3. The composition of claim 1, wherein the silica filler is a silane-treated fumed silica or a D₄-treated fumed silica.

4. The composition of claim 1, wherein the silicone additive comprises a compound having the following formula: 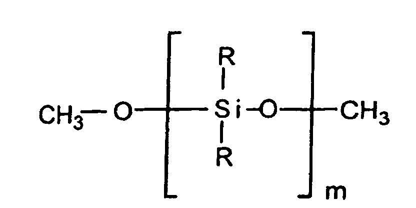 wherein m is from 4 to 30, and each R independently represents hydrogen, C₁₋₁₅ alkyl, C₁₋₁₀ alkenyl, C₅₋₈cycloalkyl, or aryl; or a compound having the following formula: 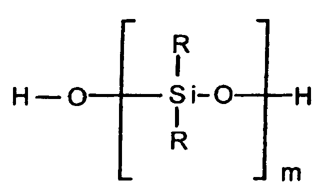 wherein m is from 4 to 30, and each R independently represents hydrogen, C₁₋₁₅ alkyl, C₂₋₁₀ alkenyl, C₅₋₁₂ cycloalkyl, or aryl; or a vinyl-functionalized alkoxysilane.

5. The composition of claim 1, wherein component c) comprises a compound having the following formula: 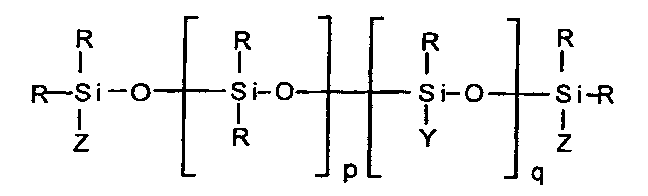 wherein Y is given by the formula : 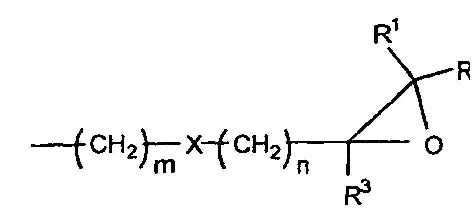
Z is Y or R;
p is from 1 to 100;
q is from 1 to 50;
m is from 1 to 5;
n is from 1 to 3;
R, R¹, R² and R³ are each independently H, C₁₋₁₀ alkyl, C₂₋₁₀ alkenyl, C₅₋₁₂ cycloalkyl or aryl; further R¹ and R³ can be joined together to form a 5 or 6 membered ring; and
X is -CH₂-, O, -NH- or S ; or
a compound containing the following functional group: 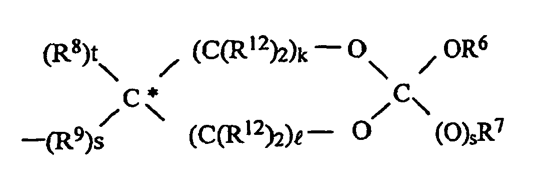
wherein
R⁶ is a C₁₋₁₀ primary or secondary alkyl or aralkyl or a C₆₋₁₀ aromatic radical or an alkylene radical forming a second 4 to 8 membered ring with C* thus producing a bicyclo compound; R⁷ is a C₁₋₁₀ primary or secondary alkyl or aralkyl or a C₆₋₁₀ aromatic radical, or R⁶ and R⁷ taken together with atoms connecting them can form a 4 to 8 membered ring thus producing a spirocyclo compound; R⁸ is a hydrogen, alkyl or aryl; R⁹ is a C₁₋₆ alkylene radical; k is an integer from 1 to 2; ℓ is an integer from 0 to 1; s is an integer from 0 to 1; t is 0 when R⁶ and C* form a bicyclo compound and is otherwise 1; and each R¹² is independently hydrogen, C₁₋₅ hydrocarbon, substituted or unsubstituted aromatic radical or a halogen.

6. The composition of claim 5, wherein the functional group is attached to a compound selected from the group consisting of a siloxy compound, an alkyl ester, an alkyl compound, an alkenyl compound, and a polysiloxane compound.

7. The composition of claim 1, wherein the composition comprises dispersed impact modifier particles coated with the at least one polyester or polyamide.

8. An article made from the composition of claim 1.

9. A method for preparing a blend of
a) 100 parts by weight of at least one polyester or polyamide;
b) from 5 to 40 parts by weight of an impact modifier composition comprising
i) 100 parts by weight of a polysiloxane compound as defined in claim 1;
ii) from 30 to 100 parts by weight of a silica filler; and
iii) from 0 to 20 parts by weight of a silicone additive; and
c) from 0.05 to 7 parts by weight of an epoxy- or orthoester-functionalized silicone compound, which method comprises intimately mixing the components of the blend for a time and under shear conditions sufficient to convert the impact modifier composition to dispersed particles coated with the at least one polyester or polyamide.

## Patentansprüche

1. Eine thermoplastische Formmasse aufweisend:
a) 100 Gewichtsteile wenigstens eines Polyesters oder Polyamids;
b) 5 - 40 Gewichtsteile einer Schlagzähmodifizierungszusammensetzung umfassend
i) 100 Gewichtsteile einer Polysiloxanverbindung mit der Struktur 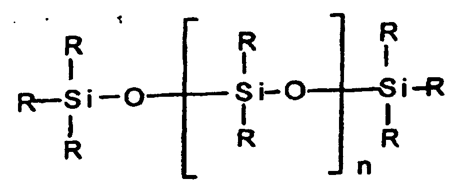 worin jedes R unabhängig Wasserstoff, C₁₋₁₅ Alkyl, C₂₋₁₀ Alkenyl, C₅₋₁₂ Cycloalkyl, oder Aryl darstellt und n so gewählt ist, dass die Verbindung ein nominales Gewichtsmittel des Molekulargewichts von 100.000 bis 1.500.000 hat.
ii) 30 bis 100 Gewichtsteile eines Silicafüllstoffs; und
iii) 0 bis 20 Gewichtsteile eines Silikonadditivs; und
c) 0,05 bis 7 Gewichtsteile einer Epoxy- oder Orthoester-funktionalisierten Verbindung.

2. Masse nach Anspruch 1, **dadurch gekennzeichnet, dass** der Polyester ein Polyalkylenterehpthalatharz ist.

3. Masse nach Anspruch 1, **dadurch gekennzeichnet, dass** der Silicafüllstoff eine Silan-behandelte pyrogene Kieselsäure oder eine D₄-behandelte pyrogene Kieselsäure ist.

4. Masse nach Anspruch 1, **dadurch gekennzeichnet, dass** das Silikonadditiv eine Verbindung umfasst mit der folgenden Formel: 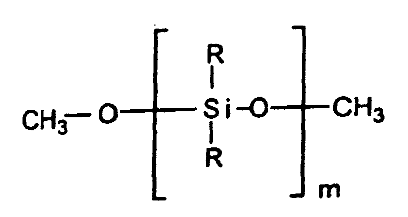 worin m 4 bis 30 ist und jedes R unabhängig Wasserstoff, C₁₋₁₅ Alkyl, C₁₋₁₀ Alkenyl, C₅₋₈ Cycloalkyl oder Aryl darstellt; oder eine Verbindung mit der folgenden Formel: 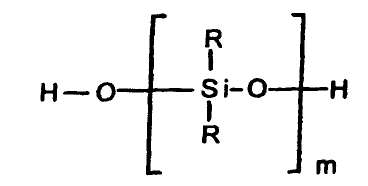 worin m 4 bis 30 ist und jedes R unabhängig Wasserstoff, C₁₋₁₅ Alkyl, C₂₋₁₀ Alkenyl, C₅₋₁₂ Cycloalkyl oder Aryl darstellt; oder ein Vinyl-funktionalisiertes Alkoxysilan.

5. Masse nach Anspruch 1, **dadurch gekennzeichnet, dass** Komponente c) eine Verbindung umfasst mit der folgenden Formel: 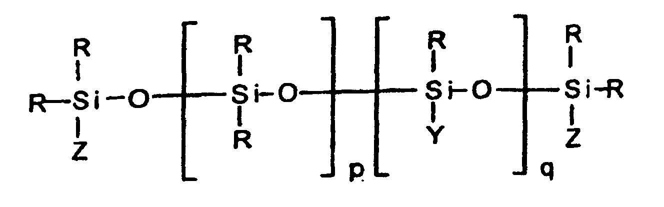 worin Y durch die Formel gegeben ist: 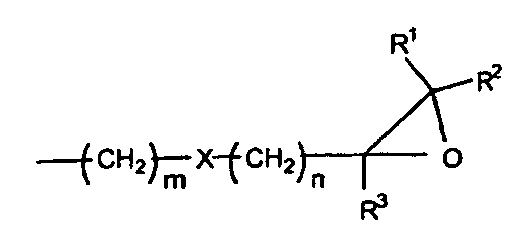 Z Y oder R ist;
p 1 bis 100 ist;
q 1 bis 50 ist;
m 1 bis 5 ist;
n 1 bis 3 ist;
R, R¹, R² und R³ jeweils unabhängig H, C₁₋₁₀ Alkyl, C₂₋₁₀ Alkenyl, C₅₋₁₂ Cyclolakyl oder Aryl sind; weiterhin R¹ und R³ zusammen verbunden sein können unter Bildung eines 5- oder 6-gliedrigen Ringes; und
x -CH₂-, O, -NH- oder S ist; oder
eine Verbindung enthaltend die folgende funktionale Gruppe: 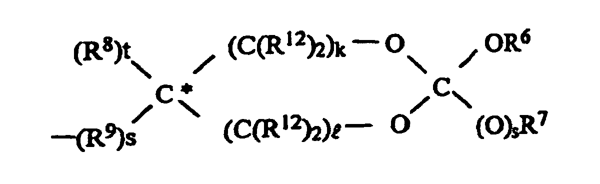 worin R⁶ ein C₁₋₁₀ primäres oder sekundäres Alkyl oder Aralkyl oder ein C₆₋₁₀ aromatischer Rest oder ein Alkylenrest ist, der einen zweiten 4- bis 8-gliedrigen Ring mit C* bildet und somit eine Bicycloverbindung darstellt; R⁷ C₁₋₁₀ primäres oder sekundäres Alkyl oder Aralkyl ist oder ein C₆₋₁₀ aromatischer Rest oder R⁶ und R⁷ zusammengenommen mit Atomen, welche sie verbinden, einen 4- bis 8-gliedrigen Ring bilden können und somit eine Spirocycloverbindung darstellen; R⁸ Wasserstoff, Alkyl oder Aryl ist; R⁹ ein C₁₋₆ Alkylenrest ist; k eine ganze Zahl von 1 bis 2 ist; ℓ eine ganze Zahl von 0 bis 1 ist: s eine ganze Zahl von 0 bis 1 ist; t 0 ist, wenn R⁶ und C* eine Bicycloverbindung ausbilden und andernfalls 1 ist; und jedes R¹² unabhängig Wasserstoff, C₁₋₅ Kohlenwasserstoff, substituierter oder unsubstituierter aromatischer Rest oder ein Halogen ist.

6. Masse nach Anspruch 5, **dadurch gekennzeichnet, dass** die funktionale Gruppe mit einer Verbindung verbunden ist, ausgewählt aus der Gruppe bestehend aus einer Siloxyverbindung, einem Alkylester, einer Alkylverbindung, einer Alkenylverbindung und einer Polysiloxanverbindung.

7. Masse nach Anspruch 1, **dadurch gekennzeichnet, dass** die Masse dispergierte Schlagzähmodifizierungspartikel umfasst, die mit dem wenigstens einen Polyester oder Polyamid beschichtet sind.

8. Gegenstand aus der Formmasse nach Anspruch 1.

9. Verfahren zur Herstellung eines Blends aus
a) 100 Gewichtsteilen wenigstens eines Polyester oder Polyamids;
b) 5 - 40 Gewichtsteile einer Schlagzähmodifizierungszusammensetzung umfassend
i) 100 Gewichtsteile einer Polysiloxanverbindung mit der Struktur wie in Anspruch 1 definiert;
ii) 30 bis 100 Gewichtsteile eines Silicafüllstoffs; und
iii) 0 bis 20 Gewichtsteile eines Silikonadditivs; und
c) 0,05 bis 7 Gewichtsteile einer Epoxy- oder Orthoester-funktionalisierten Silikonverbindung, bei welchem Verfahren man die Komponenten des Blends innig mischt für eine Dauer und unter Scherbedingungen, die ausreichen, die Schlagzähmodifzierungszusammensetzung in dispergierte Partikeln umzuwandeln, die mit dem wenigstens einen Polyester oder Polyamid beschichtet sind.

## Revendications

1. Composition thermoplastique pour moulage, qui comprend :
a) 100 parties en poids d'au moins un polyester ou polyamide,
b) 5 à 40 parties en poids d'une composition modifiant la résistance au choc, comprenant :
i) 100 parties en poids d'un polysiloxane de structure 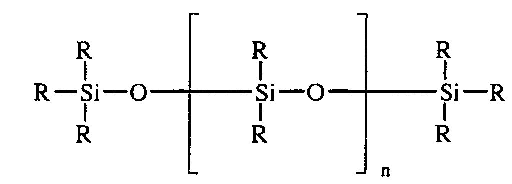 dans laquelle chaque R représente indépendamment un atome d'hydrogène, un groupe alkyle en C₁ à C₁₅, un groupe alcényle en C₂ à C₁₀, un groupe cycloalkyle en C₅ à C₁₂ ou un groupe aryle, et n a une valeur telle que le polysiloxane a une masse moléculaire moyenne en poids nominale de 100 000 à 1 500 000,
ii) 30 à 100 parties en poids d'une charge de silice, et
iii) 0 à 20 parties en poids d'un additif de type silicone, et
c) 0,05 à 7 parties en poids d'un composé à groupe fonctionnel époxy ou orthoester.

2. Composition selon la revendication 1, dont le polyester est une résine de poly(téréphtalate d'alkylène).

3. Composition selon la revendication 1, dont la charge de silice est de la silice fumée traitée par un silane, ou de la silice fumée traitée par de l'octaméthylcyclotétrasiloxane D₄.

4. Composition selon la revendication 1, dont l'additif de type silicone comprend un composé de formule : 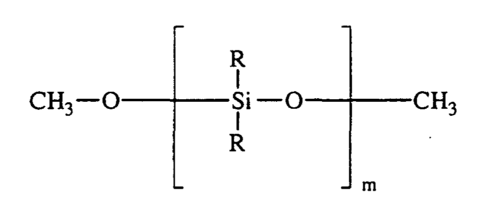 dans laquelle m représente un nombre de 4 à 30, et chaque R représente indépendamment un atome d'hydrogène, un groupe alkyle en C₁ à C₁₅, un groupe alcényle en C₁ à C₁₀, un groupe cycloalkyle en C₅ à C₈ ou un groupe aryle,
ou un composé de formule : 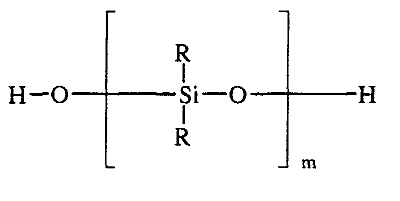 dans laquelle m représente un nombre de 4 à 30, et chaque R représente indépendamment un atome d'hydrogène, un groupe alkyle en C₁ à C₁₅, un groupe alcényle en C₂ à C₁₀, un groupe cycloalkyle en C₅ à C₁₂ ou un groupe aryle,
ou un alcoxysilane à groupe fonctionnel vinyle.

5. Composition selon la revendication 1, dont le constituant c) comprend un composé de formule : 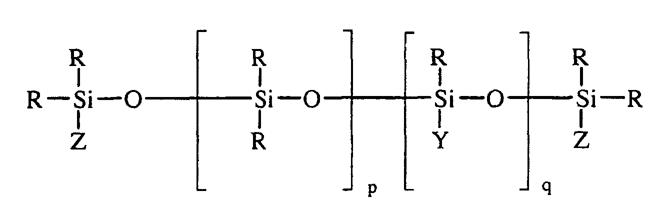 dans laquelle Y représente : 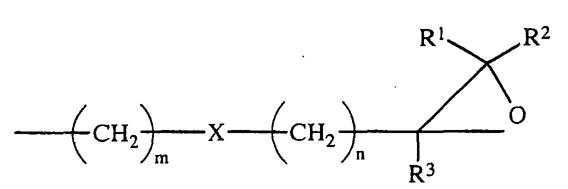 Z représente Y ou R,
p représente un nombre de 1 à 100,
q représente un nombre de 1 à 50,
m représente un nombre de 1 à 5,
n représente un nombre de 1 à 3,
R, R¹, R² et R³ représentent chacun indépendamment un atome d'hydrogène, un groupe alkyle en C₁ à C₁₀, un groupe alcényle en C₂ à C₁₀, un groupe cycloalkyle en C₅ à C₁₂ ou un groupe aryle, ou bien R¹ et R³ peuvent être réunis ensemble pour former un cycle à 5 ou 6 chaînons, et
X représente -CH₂-, -O-, -NH- ou -S-,
ou un composé contenant le groupe fonctionnel suivant : 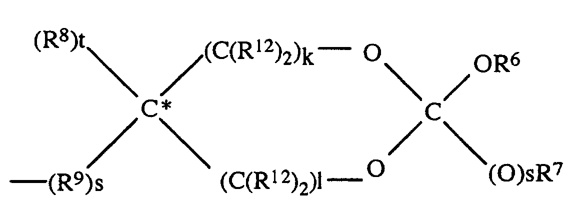 dans lequel R⁶ représente un groupe alkyle ou aralkyle, primaire ou secondaire, en C₁ à C₁₀, ou un groupe aromatique en C₆ à C₁₀, ou un radical alkylène formant avec C* un second cycle à 4 à 8 chaînons, ce qui donne un composé bicyclique, R⁷ représente un groupe alkyle ou aralkyle, primaire ou secondaire, en C₁ à C₁₀, ou un groupe aromatique en C₆ à C₁₀, ou bien R⁶ et R⁷ peuvent former ensemble, avec les atomes qui les relient, un cycle à 4 à 8 chaînons, ce qui donne un composé spirobicyclique, R⁸ représente un atome d'hydrogène ou un groupe alkyle ou aryle, R⁹ représente un radical alkylène en C₁ à C₆, k désigne un nombre entier égal à 1 ou 2, l désigne un nombre entier égal à 0 ou 1, s désigne un nombre entier égal à 0 ou 1, t est égal à 0 lorsque R⁶ forme avec C* un composé bicyclique, et est égal à 1 dans les autres cas, et chaque R¹² représente indépendamment un atome d'hydrogène ou d'halogène, un groupe hydrocarboné en C₁ à C₅, ou un groupe aromatique substitué ou non-substitué.

6. Composition selon la revendication 5, pour laquelle le groupe fonctionnel est lié à un groupe pris parmi un groupe siloxy, un groupe ester d'alkyle, un groupe alkyle ou un groupe alcényle, ou à un composé polysiloxane.

7. Composition selon la revendication 1, qui renferme des particules dispersées d'agent modifiant la résistance au choc, revêtues dudit au moins un polyester ou polyamide.

8. Article préparé à partir de la composition selon la revendication 1.

9. Procédé de préparation d'un mélange contenant :
a) 100 parties en poids d'au moins un polyester ou polyamide,
b) 5 à 40 parties en poids d'une composition modifiant la résistance au choc, comprenant :
i) 100 parties en poids d'un polysiloxane tel que défini dans la revendication 1,
ii) 30 à 100 parties en poids d'une charge de silice, et
iii) 0 à 20 parties en poids d'un additif de type silicone, et
c) 0,05 à 7 parties en poids d'un composé à groupe fonctionnel époxy ou orthoester,
procédé qui comprend le mélange intime des constituants du mélange, pendant une durée et dans des conditions de cisaillement suffisantes pour transformer la composition modifiant la résistance au choc, en des particules dispersées, revêtues dudit au moins un polyester ou polyamide.
